(19) Europäisches Patentamt / European Patent Office / Office européen des brevets

(11) **EP 4 435 064 B1**

(12) **EUROPEAN PATENT SPECIFICATION**

(45) Date of publication and mention
of the grant of the patent:
**22.04.2026 Bulletin 2026/17**

(21) Application number: **24165016.7**

(22) Date of filing: **21.03.2024**

(51) International Patent Classification (IPC):
***C09D 11/101*** (2014.01)  ***C09D 11/322*** (2014.01)
***C09D 11/36*** (2014.01)

(52) Cooperative Patent Classification (CPC):
**C09D 11/101; C09D 11/322; C09D 11/36**

(54) **NONAQUEOUS INKJET INK AND METHOD FOR FORMING CURED PRODUCT**

NICHTWÄSSRIGE TINTENSTRAHLTINTE UND VERFAHREN ZUR HERSTELLUNG EINES GEHÄRTETEN PRODUKTS

ENCRE NON AQUEUSE POUR JET D'ENCRE ET PROCÉDÉ DE FORMATION D'UN PRODUIT DURCI

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.03.2023 JP 2023046946**

(43) Date of publication of application:
**25.09.2024 Bulletin 2024/39**

(73) Proprietor: **KONICA MINOLTA, INC.**
**Tokyo 100-7015 (JP)**

(72) Inventors:
• **MIYANO, Masashi**
**Tokyo, 100-7015 (JP)**
• **MORI, Hisashi**
**Tokyo, 100-7015 (JP)**

(74) Representative: **MFG Patentanwälte**
**Meyer-Wildhagen Meggle-Freund**
**Gerhard PartG mbB**
**Amalienstraße 62**
**80799 München (DE)**

(56) References cited:
**EP-A1- 2 682 438  WO-A1-2014/073680**

**Description**

Background

Technological Field

The present invention relates to a nonaqueous inkjet ink and a method for forming a cured product.

Description of the Related art

An inkjet ink containing inorganic particles such as titanium oxide as a white pigment and conductive particles is known. There is a problem that the inorganic particles easily settle in the ink during storage or waiting before discharge.

In order to solve this problem, in a white ink composition for inkjet described in JP 2004-256726 A, fine particle barium sulfate is blended in the ink together with titanium oxide, and sedimentation of titanium oxide is suppressed by the fine particle barium sulfate.

In addition, in an inkjet ink described in JP 2021-155502 A, titanium oxide that has an average particle size of less than 100 nm and hardly settles is used, and hollow particles having an average particle size of 100 nm or more, which hardly settle by being made hollow, increase whiteness of a recorded matter to a sufficient degree.

In addition, in an anisotropic conductive adhesion inkjet ink described in JP 2001-135141 A, sedimentation of components including conductive particles is suppressed by an acrylic polymer, silica particles having a particle size of 0.001 to 0.5 $\mu$m, and a silicone resin powder having a particle size of 0.5 to 10 $\mu$m.

As described in JP 2004-256726 A, JP 2021-155502 A, and JP 2001-135141 A, various methods for suppressing sedimentation of inorganic particles in an inkjet ink have been studied. However, according to findings by the present inventors, sedimentation of inorganic particles cannot be completely suppressed even by the methods described in these documents. Once inorganic particles settle, it is not easy to disperse the inorganic particles again. In addition, in recent years, blending inorganic particles having a large particle size such as 1 $\mu$m or more in an inkjet ink has been studied, but inorganic particles having such a large particle size easily settle, and redispersion after sedimentation is not easy. Relevant prior art documents represent WO2014/073680 A1 and EP2682438 A1.

Summary

The present invention has been made in view of the above circumstances, and an object of the present invention is to provide a nonaqueous inkjet ink having excellent redispersibility of inorganic particles that have settled, and a method for forming a cured product using the nonaqueous inkjet ink.

To achieve the abovementioned object, according to an aspect of the present invention, a nonaqueous inkjet ink reflecting one aspect of the present invention comprises inorganic particles and silicone resin particles, wherein the silicone resin particles have an average particle size of 0.3 $\mu$m or more and 10 $\mu$m or less, and the average particle size of the silicone resin particles is smaller than a median diameter of the inorganic particles.

Detailed Description of Embodiments

Hereinafter, one or more embodiments of the present invention will be described. However, the scope of the invention is not limited to the disclosed embodiments.

1. Nonaqueous inkjet ink

An embodiment of the present invention relates to a nonaqueous inkjet ink (hereinafter, also simply referred to as "ink") containing inorganic particles and silicone resin particles. Hereinafter, each of the components will be described.

1-1. Inorganic particles

The type of the inorganic particles is not particularly limited. The inorganic particles may be pigment particles that impart characteristics such as color tone, conductivity, insulating properties, heat dissipation properties, and a negative thermal expansion coefficient to a cured product formed by the ink, or may be particles that are added separately from the pigment to adjust physical properties of the cured product.

The inorganic particles only need to be particles containing an atom other than carbon as a main component. Containing an atom other than carbon as a main component means containing an atom other than carbon in an amount of 50% by mass or more with respect to the total mass of the inorganic particles.

Examples of the inorganic particles include:

silica particles;
metal oxide particles such as titanium oxide particles, alumina particles, zirconia particles, zinc oxide particles, and iron oxide particles;
metal hydroxide particles such as magnesium hydroxide particles, aluminum hydroxide particles, and calcium hydroxide particles;
nitride particles such as silicon nitride particles, titanium nitride particles, and aluminum nitride particles;
glitter pigment particles (or conductive particles) such as silver particles;
glass particles such as glass beads and glass flakes;
silicate particles such as magnesium silicate particles;
ceramic particles such as kaolin particles, calcined kaolin particles, clay, talc, and zeolite; and
light accumulating pigment particles that absorb light having a predetermined wavelength, accumulate light energy, and can emit accumulated light energy as light having a wavelength different from the absorbed light for a long time.

Examples of the light accumulating pigment include those obtained by subjecting a mother crystal which is a metal compound to an activation treatment.

Examples of the mother crystal include sulfides such as zinc sulfide, calcium sulfide, germanium sulfide, strontium sulfide, and yttrium sulfide, metal oxides such as calcium oxide, strontium oxide, barium oxide, alumina, and cerium oxide, and aluminates such as calcium aluminate, strontium aluminate, and barium aluminate. Among these crystals, strontium aluminate ($SrAl_2O_4$: Eu, Dy) is preferable.

Examples of an activator that activates the mother crystal include europium, terbium, yttrium, zirconium, dysprosium, and barium. Among these activators, europium and dysprosium are preferable.

An excitation spectrum of the light accumulating pigment preferably has a peak wavelength of 300 nm or more and 400 nm or less. When the peak wavelength of the excitation spectrum of the light accumulating pigment falls within the above range, the light accumulating pigment can be sufficiently excited by sunlight, and a cured product is easily adapted to outdoor use.

An emission spectrum of the light accumulating pigment can have a peak wavelength of, for example, 400 nm or more and 700 nm or less, and preferably has a peak wavelength of 450 nm or more and 600 nm or less from a viewpoint of further enhancing visibility of the cured product.

Among these inorganic particles, glitter pigment particles, zinc oxide particles, and light accumulating pigment particles are preferable. Zinc oxide particles and light accumulating pigment particles are more preferable, and light accumulating pigment particles are still more preferable from a viewpoint of facilitating diffusion of silicone resin particles into the ink.

The inorganic particles may be hollow particles or solid particles.

The shape of the inorganic particle is not particularly limited, and may be a spherical shape or a non-spherical shape such as a flat plate shape or a whisker shape. Among these shapes, a spherical shape is preferable because an effect of improving redispersibility after sedimentation by silicone resin particles is easily enhanced. For example, the inorganic particle preferably has an aspect ratio, which is a ratio between a major axis and a minor axis, of 1.0 or more and 1.5 or less, more preferably 1.0 or more and 1.2 or less.

The major axis and minor axis of the inorganic particle can be an average of major axes and an average of minor axes in an image of 1000 inorganic particles arbitrarily selected from inorganic particles in the ink, appearing in an image captured with a transmission electron microscope (TEM), a scanning electron microscope (SEM), or the like, respectively.

A median diameter of the inorganic particles in the ink is not particularly limited, can be 0.2 $\mu$m or more and 20 $\mu$m or less, and is preferably 0.3 $\mu$m or more and 10 $\mu$m or less, more preferably 0.5 $\mu$m or more and 5 $\mu$m or less, and still more preferably 0.5 $\mu$m or more and 3 $\mu$m or less. As the median diameter is larger, the inorganic particles more easily settle in the ink, and the effect of improving redispersibility after sedimentation by silicone resin particles is more remarkably observed. As the median diameter is smaller, the inorganic particles are more easily redispersed after sedimentation, and dischargeability from an inkjet head is more favorable.

As the median diameter of the inorganic particles, a particle size ($d_{50}$) at which a cumulative value in a volume-based particle size distribution is 50% can be used.

A specific gravity of the inorganic particles can be 2 or more and 6 or less, and is preferably 2.5 or more and 5 or less, and more preferably 3 or more and 4.5 or less. As the specific gravity is larger, the inorganic particles more easily settle in the ink, and the effect of improving redispersibility after sedimentation by silicone resin particles is more remarkably observed.

The inorganic particles may be dispersed with a dispersant. The inorganic particles may be dispersed with only one type of dispersant, or may be dispersed with two or more types of dispersants.

Examples of the dispersant include a carboxylic acid ester having a hydroxy group, a salt of a long chain polyaminoamide and a high molecular weight acid ester, a salt of a high molecular weight polycarboxylic acid, a salt of a long chain polyaminoamide and a polar acid ester, a high molecular weight unsaturated acid ester, a high molecular weight copolymer, a modified polyurethane, a modified polyacrylate, a polyether ester anionic activator, a naphthalene sulfonic acid formalin condensate salt, an aromatic sulfonic acid formalin condensate salt, a polyoxyethylene alkyl phosphoric acid ester, a polyoxyethylene nonylphenyl ether, and stearylamine acetate. Examples of commercially available products of the dispersant include Solsperse series (manufactured by Avecia, "Solsperse" is a registered trademark of the company), PB series (manufactured by Ajinomoto Fine-Techno Co., Inc.), and EFKA series (manufactured by BASF, "EFKA" is a registered trademark of the company).

The content of the dispersant is preferably 0.01% by mass or more and 20% by mass or less with respect to the total mass of the inorganic particles.

The content of the inorganic particles only needs to be set according to an application of the inorganic particles. For example, the content of the inorganic particles can be 1% by mass or more and 40% by mass or less, and is preferably 2% by mass or more and 35% by mass or less, and more preferably 3% by mass or more and 30% by mass or less with respect to the total mass of the ink. As the content of the inorganic particles is smaller, redispersibility of the inorganic particles that have settled is higher.

1-2. Silicone resin particle

The silicone resin particles are particles whose average particle size is smaller than the median diameter of the inorganic particles. Such silicone resin particles enter a space between the inorganic particles to enhance fluidity of the inorganic particles. It is considered that this makes it easy to redisperse the inorganic particles that have settled.

When the inorganic particles that have settled cannot be redispersed, the concentration of the inorganic particles in the inkjet ink to be discharged tends to fluctuate, or the viscosity of the inkjet ink fluctuates, leading to unstable discharge. In addition, when the inkjet ink before discharge is circulated in an ink flow path or an inkjet head, the circulation of the inkjet ink may be hardly stabilized. In the present embodiment, the silicone resin particles make it easy to redisperse the inorganic particles that have settled, and these problems are less likely to occur.

In addition, the inorganic particles often have high hardness and easily damage a nozzle surface of an inkjet head. However, it is considered that the silicone resin particles entering a space between the inorganic particles enhance fluidity of the inorganic particles, whereby the inorganic particles are less likely to adhere to the nozzle surface, and damage of the nozzle surface by the inorganic particles can also be suppressed.

An average particle size of the silicone resin particles is preferably 0.2 $\mu$m or more and 7 $\mu$m or less, more preferably 0.3 $\mu$m or more and 5 $\mu$m or less, and still more preferably 0.5 $\mu$m or more and 3 $\mu$m or less. As the average particle size of the silicone resin particles is smaller, redispersibility of the inorganic particles that have settled, resistance to damage of a nozzle surface, circulation stability, and storage stability are enhanced by the above-described action. When the average particle size of the silicone resin particles is increased to some extent, the specific surface area of the inorganic particles to which the silicone resin particles adhere can be reduced, and damage of the nozzle surface by the inorganic particles can be prevented.

As the average particle size of the silicone resin particles, a manufacturer's published value can be used. In addition, the average particle size can be measured as a volume average diameter using a particle size distribution analyzer (LUMiSizer manufactured by LUM Japan Co., Ltd.) using a Stokes sedimentation method.

In addition, a ratio of the median diameter of the inorganic particles to the average particle size of the silicone resin particles (median diameter of inorganic particles/average particle size of silicone resin particles) is preferably 1.2 or more and 15 or less, more preferably 1.3 or more and 10 or less, and still more preferably 1.5 or more and 6 or less from the above viewpoint.

The silicone resin constituting the silicone resin particles only needs to have a silsesquioxane structure (($RSiO_{1.5})_n$, R represents any organic group.). The type of R in the silsesquioxane structure is not limited, and only needs to be an alkyl group, a halogen-substituted alkyl group, or the like, and is preferably a methyl group.

The silicone resin particles may be particles composed only of a silicone resin having a silsesquioxane structure, or may be particles in which a blend structure or a core-shell structure is formed by a silicone resin having a silsesquioxane structure and another resin. As the other resin, a vinyl resin or the like can be used, and an acrylic resin is preferable. When the silicone resin particles have a core-shell structure, the shell preferably contains a silicone resin. The silicone resin particles are preferably particles composed only of a silicone resin from a viewpoint of enhancing redispersibility and circulation stability of the inorganic particles that have settled.

Specific examples of the silicone resin particles include TOSPEARL 2000B, TOSPEARL 145, TOSPEARL 130, and XC-99-A8808 manufactured by MOMENTIVE Corporation.

The shape of the silicone resin particle is preferably spherical. For example, the silicone resin particle preferably has an aspect ratio, which is a ratio between a major axis and a minor axis, of 1.0 or more and 1.5 or less, more preferably 1.0 or more and 1.2 or less. The major axis and minor axis of the silicone resin particle can be measured in a similar manner to the major axis and minor axis of the inorganic particle described above.

The content of the silicone resin particles can be 0.01% by mass or more and 5% by mass or less, and is preferably 0.1% by mass or more and 3% by mass or less, and more preferably 0.3% by mass or more and 2% by mass or less with respect to the total mass of the ink. When the content of the silicone resin particles is 0.01% by mass or more, redispersibility of the inorganic particles that have settled is enhanced. When the content of the silicone resin particles is 5% by mass or less, deterioration of circulation stability by the silicone resin particles that do not enter a space between the inorganic particles is suppressed.

In addition, a ratio of the content of the silicone resin particles to the content of the inorganic particles (content (mass basis) of silicone resin particles/content (mass basis) of inorganic particles) is preferably 0.0004 or more and 0.3 or less, more preferably 0.004 or more and 0.2 or less, and still more preferably 0.01 or more and 0.1 or less.

1-3. Liquid component

The ink according to the present embodiment is a nonaqueous ink. Specifically, the ink according to the present embodiment only needs to be a polymerizable ink, a solvent-based ink, an oil ink, or the like. In the nonaqueous ink, the content of water with respect to the total mass of the ink is preferably 0% by mass or more and less than 50% by mass, more preferably 0% by mass or more and less than 30% by mass, still more preferably 0% by mass or more and less than 10% by mass, and further still more preferably 0% by mass or more and less than 5% by mass. The nonaqueous ink particularly preferably contains no water substantially. Note that containing no water substantially means that the content of water with respect to the total mass of the ink is 0% by mass or more and less than 1% by mass.

The nonaqueous ink contains a small amount of water (or no water) in a liquid component. In other words, the nonaqueous ink contains a small amount of water molecules having polarity. Therefore, in the nonaqueous ink, since the amount of a polar component is small, the silicone resin particles are easily wetted and easily enter a space between the inorganic particles. As a result, it is considered that the above-described effects such as improvement in redispersibility of the inorganic particles that have settled, improvement in rubbing resistance of a nozzle surface, and improvement in circulation stability and storage stability are effectively exhibited.

The polymerizable ink can be an ink in which the content of a polymerizable compound to be polymerized by irradiation with an active energy ray with respect to the total mass of the ink is 50% by mass or more. The solvent-based ink can be an ink in which the content of an organic solvent with respect to the total mass of the ink is 50% by mass or more. The polymerizable ink can be an ink in which the content of the polymerizable compound with respect to the total mass of the ink is 50% by mass or more. Note that the polymerizable ink can contain a photopolymerization initiator for initiating polymerization and crosslinking of the polymerizable compound. The oil ink can be an ink in which the content of an oil with respect to the total mass of the ink is 50% by mass or more.

1-3-1. Polymerizable compound and photopolymerization initiator

1-3-1-1. Polymerizable compound

The polymerizable compound may be a radically polymerizable compound or a cationically polymerizable compound. In addition, as the polymerizable compound, a combination of a radically polymerizable compound and a cationically polymerizable compound may be used.

The radically polymerizable compound is a compound having a radically polymerizable ethylenically unsaturated bond (a monomer, an oligomer, a polymer, or a mixture thereof).

Examples of the compound having a radically polymerizable ethylenically unsaturated bond include an unsaturated carboxylic acid and a salt thereof, an unsaturated carboxylic acid ester compound, an unsaturated carboxylic acid urethane compound, an unsaturated carboxylic acid amide compound and an anhydride thereof, acrylonitrile, styrene, unsaturated polyester, unsaturated polyether, unsaturated polyamide, and unsaturated urethane. Examples of the unsaturated carboxylic acid include (meth)acrylic acid, itaconic acid, crotonic acid, isocrotonic acid, and maleic acid.

Among the compounds, the radically polymerizable compound is preferably an unsaturated carboxylic acid ester compound, and more preferably a (meth)acrylate. The (meth)acrylate may be not only a monomer described below but also an oligomer, a mixture of a monomer and an oligomer, a modified product, an oligomer having a polymerizable functional group, or the like.

Examples of a monofunctional (meth)acrylate include isoamyl (meth)acrylate, stearyl (meth)acrylate, isobornyl (meth)acrylate, lauryl (meth)acrylate, octyl (meth)acrylate, decyl (meth)acrylate, isomyristyl (meth)acrylate, isostearyl (meth)acrylate, 2-phenoxyethyl (meth)acrylate, 2-ethylhexyl-diglycol (meth)acrylate, 2-hydroxybutyl (meth)acrylate, 2-(meth)acryloyloxyethylhexahydrophthalic acid, butoxyethyl (meth)acrylate, ethoxydiethylene glycol (meth)acrylate, methoxydiethylene glycol (meth)acrylate, methoxy polyethylene glycol (meth)acrylate, methoxy propylene glycol (meth) acrylate, o-phenylphenoxyethyl (meth)acrylate, m-phenoxybenzyl (meth)acrylate, cyclic trimethylolpropane formal (meth)acrylate, ethoxylated phenoxy (meth)acrylate, alkoxylated phenol (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, 2-hydroxy-o-phenylphenol propyl (meth)acrylate, 2-(meth)acryloyloxyethyl succinic acid, 2-(meth)acryloyloxyethyl phthalic acid, 2-(meth)acryloyloxyethyl-2-hydroxyethyl-phthalic acid, and t-butylcyclohexyl (meth)acrylate.

Examples of a polyfunctional (meth)acrylate include: a bifunctional (meth)acrylate including triethylene glycol di(meth)acrylate, tetraethylene glycol di(meth)acrylate, polyethylene glycol di(meth)acrylate, dipropylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, tricyclodecane dimethanol diacrylate, dimethylol-tricyclodecane di(meth)acrylate, bisphenol A type di(meth)acrylate, hydroxypivalic acid neopentyl glycol di(meth)acrylate, polytetramethylene glycol di(meth)acrylate, polyethylene glycol diacrylate, dipropylene glycol diacrylate, and tripropylene glycol diacrylate; and a trifunctional or higher functional (meth)acrylate including trimethylolpropane tri(meth)acrylate, pentaerythritol tri(meth)acrylate, pentaerythritol tetra(meth)acrylate, dipentaerythritol hexa(meth)acrylate, ditrimethylolpropane tetra(meth)acrylate, glycerin propoxy tri(meth)acrylate, and pentaerythritol ethoxy tetra(meth)acrylate.

The (meth)acrylate may be a modified product. Examples of the (meth)acrylate which is a modified product include: an ethylene oxide modified (meth)acrylate including ethylene oxide modified trimethylolpropane tri(meth)acrylate and ethylene oxide modified pentaerythritol tetraacrylate; a caprolactone modified (meth)acrylate including caprolactone modified trimethylolpropane tri(meth)acrylate; and a caprolactam modified (meth)acrylate including caprolactam modified dipentaerythritol hexa(meth)acrylate.

The (meth)acrylate may be a polymerizable oligomer. Examples of the (meth)acrylate which is a polymerizable oligomer include an epoxy (meth)acrylate oligomer, an aliphatic urethane (meth)acrylate oligomer, an aromatic urethane (meth)acrylate oligomer, a polyester (meth)acrylate oligomer, and a linear (meth)acrylic oligomer.

Examples of the cationically polymerizable compound include an epoxy compound, a vinyl ether compound, and an oxetane compound.

Examples of the epoxy compound include: an alicyclic epoxy resin such as 3,4-epoxycyclohexylmethyl-3',4'-epoxycyclohexane carboxylate, bis(3,4-epoxycyclohexylmethyl) adipate, vinylcyclohexene monoepoxide, ε-caprolactone modified 3,4-epoxycyclohexylmethyl 3',4'-epoxycyclohexane carboxylate, 1-methyl-4-(2-methyloxiranyl)-7-oxabicyclo [4,1,0] heptane, 2-(3,4-epoxycyclohexyl-5,5-spiro-3,4-epoxy) cyclohexanone-meta-dioxane, or bis(2,3-epoxycyclopentyl) ether; an aliphatic epoxy compound including a polyglycidyl ether of polyether polyol, obtained by adding one or more types of alkylene oxides (for example, ethylene oxide and propylene oxide) to an aliphatic polyhydric alcohol such as a diglycidyl ether of 1,4-butanediol, a diglycidyl ether of 1,6-hexanediol, a triglycidyl ether of glycerin, a triglycidyl ether of trimethylolpropane, a diglycidyl ether of polyethylene glycol, a diglycidyl ether of propylene glycol, ethylene glycol, propylene glycol, or glycerin; and an aromatic epoxy compound including a di- or polyglycidyl ether of bisphenol A or an alkylene oxide adduct thereof, a di- or polyglycidyl ether of hydrogenated bisphenol A or an alkylene oxide adduct thereof, and a novolac epoxy resin.

Examples of the vinyl ether compound include: a monovinyl ether compound including ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexane dimethanol monovinyl ether, n-propyl vinyl ether, isopropyl vinyl ether, isopropenyl ether-o-propylene carbonate, dodecyl vinyl ether, diethylene glycol monovinyl ether, and octadecyl vinyl ether; and a di- or tri-vinyl ether compound including ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexane dimethanol divinyl ether, and trimethylolpropane trivinyl ether.

Examples of the oxetane compound include 3-hydroxymethyl-3-methyloxetane, 3-hydroxymethyl-3-ethyl oxetane, 3-hydroxymethyl-3-propyl oxetane, 3-hydroxymethyl-3-normalbutyl oxetane, 3-hydroxymethyl-3-phenyloxetane, 3-hydroxymethyl-3-benzyloxetane, 3-hydroxyethyl-3-methyloxetane, 3-hydroxyethyl-3-ethyloxetane, 3-hydroxyethyl-3-propyloxetane, 3-hydroxyethyl-3-phenyloxetane, 3-hydroxypropyl-3-methyloxetane, 3-hydroxypropyl-3-ethyloxetane, 3-hydroxypropyl-3-propyloxetane, 3-hydroxypropyl-3-phenyloxetane, 3-hydroxybutyl-3-methyloxetane, 1,4 bis{[(3-ethyl-3-oxetanyl) methoxy] methyl} benzene, 3-ethyl-3-(2-ethylhexyloxymethyl) oxetane, and di[1-ethyl (3-oxetanyl)] methyl ether.

The polymerizable compound preferably contains a compound having an aromatic ring in a molecule thereof. The polymerizable compound having an aromatic ring in a molecule thereof has an aromatic ring having low polarity, therefore makes the silicone resin particles easily wetted and easily enter a space between the inorganic particles, and can cause the above-described effect by the silicone resin particles to be more effectively exhibited.

The content of the polymerizable compound having an aromatic ring is preferably 20% by mass or more and 80% by mass or less, and more preferably 30% by mass or more and 70% by mass or less with respect to the total mass of the ink.

Examples of the polymerizable compound having an aromatic ring include phenol 4EO-modified acrylate, 2-phenoxyethyl acrylate, m-phenoxybenzyl acrylate, EO-modified o-phenylphenol acrylate, bisphenol fluorene diacrylate (A-BPEF), bisphenol A type 10EO-modified diacrylate, bisphenol A type diacrylate, bisphenol A type PO-modified diacrylate, bisphenol A type EO-modified diacrylate, benzyl acrylate, cumylphenoxyethyl acrylate, 2-hydroxy-3-phenoxypropyl acrylate, and 2-hydroxy-o-phenylphenol propyl acrylate.

The content of the polymerizable compound is preferably 50% by mass or more to 97% by mass or less, and more preferably 60% by mass or more to 95% by mass or less with respect to the total mass of the polymerizable ink.

1-3-1-2. Photopolymerization initiator

The photopolymerization initiator can be a radical initiator when the polymerizable ink contains a radically polymerizable compound, and can be a cationic initiator (photoacid generator) when the polymerizable ink contains a cationically polymerizable compound. Note that when polymerization is initiated by irradiation with an electron beam, the polymerizable ink does not need to contain a photopolymerization initiator.

Examples of the radical polymerization initiator include a hydrogen abstraction type photopolymerization initiator and an intramolecular cleavage type photopolymerization initiator. Examples of the hydrogen abstraction type photopolymerization initiator includes an intramolecular hydrogen abstraction type photopolymerization initiator and an intermolecular hydrogen abstraction type photopolymerization initiator.

The intramolecular hydrogen abstraction type photopolymerization initiator is a photopolymerization initiator that is excited by irradiation with an active energy ray and causes a hydrogen abstraction reaction in a molecule to generate a radical. Examples of the intramolecular hydrogen abstraction type photopolymerization initiator include a methyl benzoylformate-based photopolymerization initiator such as methyl phenylglyoxylate, and an oxyphenyl-based photopolymerization initiator such as a mixture of an oxyphenylacetic acid-2-[2-oxo-2-phenylacetoxy-ethoxy]ethyl ester and an oxyphenylacetic acid 2-[2-hydroxy-ethoxy]ethyl ester. Among these compounds, a compound having a glyoxylic acid structure such as a methyl benzoylformate-based photopolymerization initiator is preferable because hydrogen is less likely to be abstracted from a molecular chain of the polymerizable compound during polymerization.

Examples of commercially available products of the intramolecular hydrogen abstraction type photopolymerization initiator include Omnirad MBF and Omnirad 754 (both are manufactured by IGM Resins, and "Omnirad" is a registered trademark of the company).

The intermolecular hydrogen abstraction type photopolymerization initiator is a photopolymerization initiator that is excited by irradiation with an active energy ray such as an ultraviolet ray and abstracts a hydrogen atom from another molecule to generate a radical. Examples of the intermolecular hydrogen abstraction type photopolymerization initiator include: a benzophenone-based initiator including benzophenone, methyl o-benzoylbenzoate, 4-phenylbenzophenone, 4,4'-dichlorobenzophenone, hydroxybenzophenone, 4-benzoyl-4'-methyl-diphenylsulfide, acrylated benzophenone, 3,3',4,4'-tetra(t-butylperoxycarbonyl)benzophenone, and 3,3'-dimethyl-4-methoxybenzophenone; and a thioxanthone-based initiator including 2-isopropylthioxanthone, 2,4-dimethylthioxanthone, 2,4-diethylthioxanthone, and 2,4-dichlorothioxanthone.

Examples of commercially available products of the intermolecular hydrogen abstraction type photopolymerization initiator include Omnirad 500 (manufactured by IGM Resins) and Speedcure ITX (manufactured by Sartomer, "Speedcure" is a registered trademark of Arkema France).

Examples of the intramolecular cleavage type photopolymerization initiator include acetophenone initiators such as 2-hydroxy-2-methyl-1-phenylpropan-1-one, benzyl dimethyl ketal, 4-(2-hydroxyethoxy)phenyl-(2-hydroxy-2-propyl) ketone, 1-hydroxycyclohexyl-phenyl ketone, 2-methyl-2-morpholino(4-methylthiophenyl)propan-1-one, and 2-benzyl-2-dimethylamino-1-(4-morpholinophenyl)-butanone; benzoin initiators such as benzoin, benzoin methyl ether, and benzoin isopropyl ether; and acylphosphine oxide initiators such as 2,4,6-trimethylbenzoin diphenylphosphine oxide and bis(2,4,6-trimethylbenzoin)phenylphosphine oxide.

Examples of commercially available products of the intramolecular cleavage type photopolymerization initiator include Omnirad 127, Omnirad 184, Omnirad 651, Omnirad 2959, Omnirad 819, and Esacure One (all manufactured by IGM Resins).

The content of the photopolymerization initiator is preferably 3% by mass or more and 20% by mass or less, more preferably 3% by mass or more and 15% by mass or less, still more preferably 3% by mass or more and 10% by mass or less, and particularly preferably 5% by mass or more and 10% by mass or less with respect to the total mass of the polymerizable ink. When the content is 3% by mass or more, curability and adhesion of the polymerizable ink can be further enhanced.

1-3-2. Organic solvent

Examples of the organic solvent include an aliphatic alcohol, an aromatic alcohol, a diol, a triol, a glycol ether, a poly(glycol) ether, a lactam, formamide, an acetamide, a long chain alcohol, ethylene glycol, propylene glycol, diethylene glycol, triethylene glycol, glycerin, dipropylene glycol, glycol butyl ether, polyethylene glycol, polypropylene glycol, an amide, an amine, an ether, a carboxylic acid, an ester, an organosulfide, an organosulfoxide, a sulfone, an alcohol derivative, carbitol, butyl carbitol, cellosolve, an ether derivative, an amino alcohol, and a ketone.

Among these solvents, a glycol ether and a fatty acid ester are preferable from a viewpoint of enhancing dispersibility of the inorganic particles.

Examples of the glycol ether include diethylene glycol diethyl ether, diethylene glycol methyl ethyl ether, diethylene glycol dibutyl ether, dipropylene glycol dimethyl ether, tetraethylene glycol dimethyl ether, other polyethylene glycols, and other polypropylene glycols.

Examples of the fatty acid ester include methyl oleate, methyl caprylate, methyl caprate, methyl laurate, methyl myristate, methyl palmitate, methyl stearate, methyl oleate, methyl tallowate, rice bran fatty acid methyl, rapeseed fatty acid methyl, soybean fatty acid methyl, n-butyl palmitate, n-butyl stearate, rapeseed fatty acid n-butyl, soybean fatty acid n-butyl, rice bran fatty acid i-butyl, rapeseed fatty acid i-butyl, octyl palmitate, octyl oleate, rapeseed fatty acid octyl, plant fatty acid octyl, isopropyl myristate, and isopropyl palmitate.

The content of the organic solvent is preferably 50% by mass or more and 97% by mass or less, and more preferably 60% by mass or more and 95% by mass or less with respect to the total mass of the solvent-based ink.

1-3-3. Oil

Examples of the oil include: aliphatic hydrocarbons including octane, nonane, decane, dodecane, isooctane, and isodecane; alicyclic hydrocarbons including cyclohexane, cyclooctane, and cyclodecane; and a higher alcohol including octanol, decanol, and octadecenol.

The oil ink may further contain a higher fatty acid ester, a silicone oil, and the like as solvents, and may further contain a vegetable oil. Examples of the vegetable oil include: semi-drying oils including a soybean oil, a cottonseed oil, a rapeseed oil, a sesame oil, and a corn oil; non-drying oils including an olive oil, a peanut oil, and a camellia oil; and drying oils including a linseed oil and a safflower oil.

The content of the oil is preferably 50% by mass or more and 97% by mass or less, and more preferably 60% by mass or more and 95% by mass or less with respect to the total mass of the oil ink.

1-4. Other components

The ink may further contain other components such as an organic pigment, a dye, a surfactant, a fluorescent brightener, a gelling agent, and a polymerization inhibitor.

Examples of the organic pigment include a red pigment, a yellow pigment, a blue pigment, and a white pigment that are used in an image forming ink. As these pigments, known pigments can be used. Examples of the dye include a red dye, a yellow dye, and a blue dye that are used in an image forming ink. As these dyes, known dyes can be used.

Examples of the surfactant include: an anionic surfactant such as a dialkyl sulfosuccinate, an alkylnaphthalene sulfonate, or a fatty acid salt; a nonionic surfactant such as a polyoxyethylene alkyl ether, a polyoxyethylene alkyl allyl ether, an acetylene glycol, or a polyoxyethylene/polyoxypropylene block copolymer; a cationic surfactant such as an alkylamine salt or a quaternary ammonium salt; and a silicone-based or fluorine-based surfactant.

The content of the surfactant is not particularly limited, but can be, for example, 0.001% by mass or more and less than 1.0% by mass with respect to the total mass of the ink.

The gelling agent is a compound that brings the ink into a gel state at normal temperature (25°C) and into a sol state at the time of heating (for example, 80°C). For example, the gelling agent is preferably a compound that is dissolved in a liquid component (such as a polymerizable compound or an organic solvent) contained in the ink at a temperature higher than the gelling temperature of the ink and is crystallized at a temperature equal to or lower than the gelling temperature of the ink. The gelling temperature refers to a temperature at which an ink that has become sol or liquid by being heated undergoes a phase transition from sol to gel to rapidly change a viscosity of the ink when the ink is cooled. Specifically, the gelling temperature of an ink that has become sol or liquid can be a temperature at which a viscosity of the ink is rapidly increased when the ink is cooed with the viscosity measured using a rheometer (for example, MCR300 manufactured by Anton Paar GmbH).

Examples of the gelling agent include a ketone wax, an ester wax, a petroleum-based wax, a vegetable-based wax, an animal-based wax, a mineral-based wax, a hydrogenated castor oil, a modified wax, a higher fatty acid, a higher alcohol, hydroxystearic acid, a fatty acid amide including an N-substituted fatty acid amide and a special fatty acid amide, a higher amine, an ester of a sucrose fatty acid, a synthetic wax, dibenzylidene sorbitol, a dimer acid, and a dimer diol.

The content of the gelling agent is preferably 1.0% by mass or more and 10.0% by mass or less, more preferably 2.0% by mass or more and 7.5% by mass or less, and still more preferably 2.0% by mass or more and 3.5% by mass or less with respect to the total mass of the ink.

Examples of the polymerization inhibitor include an N-oxyl-based polymerization inhibitor, a phenol-based polymerization inhibitor, a quinone-based polymerization inhibitor, an amine-based polymerization inhibitor, and a copper dithiocarbamate-based polymerization inhibitor. In the ink, only one type of polymerization inhibitor may be contained, or two or more types of polymerization inhibitors may be contained in combination.

Examples of the N-oxyl-based polymerization inhibitor include 4-hydroxy-2,2,6,6-tetramethylpiperidine-N-oxyl (TEMPO), 4-hydroxy-2,2,6,6-tetramethyl-piperidine-N-oxyl, 4-oxo-2,2,6,6-tetramethyl-piperidine-N-oxyl, 4-methoxy-2,2,6,6-tetramethyl-piperidine-N-oxyl, and 4-acetoxy-2,2,6,6-tetramethyl-piperidine-N-oxyl. Examples of commercially available products of the N-oxyl-based polymerization inhibitor include Irgastab UV10 (manufactured by BASF ("Irgastab" is a registered trademark of the company)).

Examples of the phenol-based polymerization inhibitor include 2,6-di-tert-butylphenol, 2,4-di-tert-butylphenol, 2-tert-butyl 4,6-dimethylphenol, 2,6-di-tert-butyl-4-methylphenol, 2,4,6-tri-tert-butylphenol, 2,6-di-t-butyl-p-cresol (butylated hydroxytoluene: BHT), 4-methoxyphenol, and 2-methoxy-4-methylphenol.

Examples of the quinone-based polymerization inhibitor include hydroquinone, methoxyhydroquinone, benzoquinone, 1,4-naphthoquinone, and p-tert-butylcatechol.

Examples of the amine-based polymerization inhibitor include alkylated diphenylamine, N,N'-diphenyl-p-phenylenediamine, and phenothiazine.

Examples of the copper dithiocarbamate-based polymerization inhibitor include copper dimethyldithiocarbamate, copper diethyldithiocarbamate, and copper dibutyldithiocarbamate.

The content of the polymerization inhibitor is not particularly limited, but can be, for example, 0.01% by mass or more and 0.5% by mass or less with respect to the total mass of the ink.

1-5. Physical properties of ink

The viscosity of the ink is not particularly limited, but the viscosity at 25°C is preferably 5 mPa•s or more and 1000 mPa•s or less, and more preferably 20 mPa•s or more and 500 mPa•s or less. Storage and standby of the ink are often performed at about 25°C. As the viscosity at 25°C is lower, the silicone resin particles more easily flow, and the inorganic particles that have settled are more easily redispersed. Meanwhile, by moderately increasing the viscosity at 25°C, sedimentation of the inorganic particles can be suppressed.

The viscosity of the ink at 25°C can be a value determined by a rheometer under the condition of a shear rate of 1000/sec. As the rheometer, a stress-controlled rheometer Physica MCR series manufactured by Anton Paar GmbH can be used. A cone plate can have a diameter of 75 mm and a cone angle of 1.0°.

The ink is preferably an ink capable of forming a cured film having a volume resistivity of $10^{11}$ $\Omega$•m or more. A surface resistivity of the cured film can be measured using Hiresta UX (MCP-HT800 manufactured by Nitto Seiko Analytech Co., Ltd.).

1-6. Method for preparing ink

The ink can be prepared by mixing the components described above. At this time, components other than the inorganic particles may be mixed first, and the inorganic particles may be added later to the obtained mixture.

When the inorganic particles are dispersed with a dispersant, a dispersion liquid containing the inorganic particles, the dispersant, and a liquid component may be prepared in advance, and the remaining components may be added thereto and mixed. At this time, in order to enhance solubility of the dispersant and the like, the dispersion liquid is preferably prepared by mixing the inorganic particles, the dispersant, and the like while heating these.

When the inorganic particles are dispersed with the dispersant, silicone resin particles may be added in advance and dispersed. It is preferable to add the silicone resin particles in advance at the time of dispersion from a viewpoint of wetting the silicone resin particles with the ink and from a viewpoint of causing the silicone resin particles to enter a space between the inorganic particles.

2. Method for forming cured product

The ink described above can be applied to a base material by an inkjet method, formed into a film, and used for forming a cured product.

The application to the base material only needs to be performed by discharging the ink from an inkjet head and causing the ink to land on the base material.

A discharge method from an inkjet head may be either an on-demand method or a continuous method. The on-demand type inkjet head can be any of, for example, electromechanical conversion types such as a single cavity type, a double cavity type, a bender type, a piston type, a shear mode type, and a shared wall type, and electrothermal conversion types such as a thermal inkjet type and a bubble jet type ("bubble jet" is a registered trademark of Canon Inc.).

The inkjet head or an image forming apparatus including the inkjet head may have a configuration in which the ink is circulated inside or outside the inkjet head. When the ink is discharged while being circulated, if sedimentation of the inorganic particles occurs in a circulation flow path of the ink, dischargeability of the ink may be deteriorated. Meanwhile, in the present embodiment, since redispersibility of the inorganic particles that have settled is favorable, favorable dischargeability can be maintained even when the ink is circulated.

Note that, in a flow of the ink in an inkjet head or an image forming apparatus, when the median diameter of the inorganic particles is represented by A $\mu$m, the average particle size of the silicone resin particles is represented by B $\mu$m, and a flow rate of the ink is represented by C mL/s, the following general formula X is preferably 0.30 or more and 95.0 or less.

$$X = (A/B) \times C$$

Redispersibility of the inorganic particles that have settled can be enhanced by optimizing a liquid feeding flow rate of the ink in addition to the median diameter of the inorganic particles and the average particle size of the silicone resin particles. X is more preferably 0.30 or more and 95.0 or less, still more preferably 1.0 or more and 60 or less, particularly preferably 1.4 or more and 40 or less, and particularly preferably 1.5 or more and 40 or less from the above viewpoint. When X falls within the above range, flow stability of the ink can be enhanced. The effect of improving the flow stability is particularly remarkable in the polymerizable ink.

The type of the base material is not particularly limited, but can be, for example, paper, a resin film, an ABS resin plate, an acrylic resin plate, an aluminum plate, a glass plate, a polycarbonate plate, or cloth. Note that the shape of the base material is not particularly limited, and can be a plate shape, a film shape, a sheet shape, or various three-dimensional shapes. The ink may be applied to a space formed inside the base material by various methods.

Ink film formation only needs to be performed by a method corresponding to the type of ink. For example, when the ink is a polymerizable ink, a polymerizable compound can be polymerized and crosslinked by irradiation with an active energy ray to form a film of a cured product. Alternatively, when the ink is a solvent-based ink, an organic solvent can be evaporated by being heated to form a film of a cured product by a solid component in the ink.

Examples of the active energy ray include an electron beam, an ultraviolet ray, an $\alpha$ ray, a y ray, and an X-ray. Among these rays, an ultraviolet ray and an electron beam are preferable. The ultraviolet ray is preferably light having a peak wavelength at 360 nm or more and 410 nm or less. The ultraviolet light is preferably emitted from an LED light source. Since LED has less radiant heat than a conventional light source (for example, a metal halide lamp), when LED is used, the ink is less likely to be melted at the time of irradiation with an active energy ray, and uneven gloss or the like is less likely to be generated.

When an ultraviolet ray is used as an active energy ray, the amount of light per irradiation is preferably 500 mJ/cm$^2$ or more and 4000 mJ/cm$^2$ or less. When the amount of light is 500 mJ/cm$^2$ or more, curability of a polymerizable compound can be further improved. When the amount of light is 4000 mJ/cm$^2$ or less, discoloration of a cured product can be suppressed.

When a cured product having a large thickness is formed, application of the ink and film formation may be repeated.

After a cured product is prepared in this manner, a protective film covering the cured product may be formed with a varnish agent, a laminate film, an ink, or the like, or the cured product may be post-processed into a desired shape.

Examples

Hereinafter, the present invention will be specifically described with reference to Examples, but the scope of the present invention is not limited to the description of Examples.

[Experiment 1]

1. Preparation of materials

An inkjet ink was prepared using the following materials.

1-1. Organic solvent

Organic solvent 1: polypropylene glycol
Organic solvent 2: methyl myristate

1-2. Polymerizable compound

Monomer 1: dipropylene glycol diacrylate
Monomer 2: isobornyl acrylate
Monomer 3: phenol 4EO-modified acrylate
Monomer 4: 2-phenoxyethyl acrylate
Monomer 5: bisphenol A type 10EO-modified diacrylate
Monomer 6: benzyl acrylate

1-3. Photopolymerization initiator

Initiator 1: Omnirad MBF manufactured by IGM Resins BV
Initiator 2: Omnirad 754 manufactured by IGM Resins BV
Initiator 3: Omnirad 819 manufactured by IGM Resins BV

1-4. Inorganic particles

Inorganic particles 1: barium sulfate (H-LFM manufactured by Sakai Chemical Industry Co., Ltd.)
Inorganic particles 2: glass flakes coated with iron oxide (Moonshine Bronze Ultra Shimmer manufactured by GlassFlake, "Moonshine" is a registered trademark of the company)
Inorganic particles 3: light accumulating pigment (LumiNova G-300F manufactured by Nemoto & Co., Ltd. ("Lumi-Nova" is a registered trademark of the company))
Inorganic particles 4: zinc oxide (Candy Zinc 1000 manufactured by Sakai Chemical Industry Co., Ltd. ("Candy Zinc" is a registered trademark of the company))
Inorganic particles 5: light accumulating pigment (LumiNova G-300FF manufactured by Nemoto & Co., Ltd. ("LumiNova" is a registered trademark of the company))
Inorganic particles 6: conductive particles (ET-500W manufactured by ISHIHARA SANGYO KAISHA, LTD.)

1-5. Silicone resin particles

Silicone 1: particles of a silicone resin having a silsesquioxane bond (Tospearl 145 manufactured by NISSHO SANGYO Co., Ltd. ("Tospearl" is a registered trademark of the company), average particle size: 4.5 $\mu$m)
Silicone 2: particles of a silicone resin having a silsesquioxane bond (Tospearl 130 manufactured by NISSHO SANGYO Co., Ltd., average particle size: 2.0 $\mu$m)
Silicone 3: particles of a silicone resin having a silsesquioxane bond (XC-99-A8808 manufactured by Momentive Performance Materials Inc., average particle size: 0.7 $\mu$m)
Silicone 4: particles of a silicone resin having a silsesquioxane bond (Tospearl 2000B manufactured by NISSHO SANGYO Co., Ltd., average particle size: 6.0 $\mu$m)

1-6. Other particles

Glass beads (UBS-K0005MF manufactured by Unitika Corporation, average particle size: 2.8 $\mu$m)

1-7. Other component

Polymerization inhibitor: Irgastab UV-10 manufactured by BASF

2. Preparation of inkjet ink-1 (solvent-based ink)

2-1. Preparation of dispersion liquid

20 parts by mass of the inorganic particles 1 and 80 parts by mass of the organic solvent 2 were put in a polypropylene container together with 50 parts by mass of zirconia beads having an average particle size of 0.3 mm, and were subjected to a dispersion treatment for 30 minutes using a paint shaker, and the zirconia beads were removed to prepare a dispersion liquid 1A.

Dispersion liquids 1B to 1E were prepared in a similar manner to the preparation of the dispersion liquid 1A except that the inorganic particles were changed to the inorganic particles 2 to 5, respectively.

Thereafter, a median diameter of the inorganic particles in the dispersion liquid was measured with a particle size distribution analyzer (LUMiSizer manufactured by LUM Japan Co., Ltd.) using a Stokes sedimentation method.

An organic solvent, a dispersion liquid, and a silicone resin were mixed at a ratio presented in Table 1, and the mixture was filtered through a 30 μm polypropylene pleat filter (manufactured by Roki Techno Co., Ltd.) to obtain each of inks 1 to 6. Note that numerical values described in parentheses in the columns of "inorganic particles" and "silicone resin particles" in Table 1 are a median diameter of the inorganic particles and an average particle size of the silicone resin particles in a dispersion liquid, respectively.

[Table 1]

| Ink No. | | 1 | 2 | 3 | 4 | 5 | 6 |
|---|---|---|---|---|---|---|---|
| Solvent | Organic solvent 1 | 29.0 | 29.0 | 29.0 | 29.0 | 29.0 | 29.0 |
| | Organic solvent 2 | 50.0 | 50.0 | 50.0 | 50.0 | 50.0 | 50.0 |
| Inorganic particles | Dispersion liquid 1A (8 μm) (barium sulfate) | | | | | | |
| | Dispersion liquid 1B (6 μm) (glass flakes) | | | | | | |
| | Dispersion liquid 1C (8 μm) (light accumulating pigment) | 20.0 | 20.0 | 20.0 | 20.0 | | |
| | Dispersion liquid 1D (1 μm) (zinc oxide) | | | | | 20.0 | |
| | Dispersion liquid 1E (4.5 μm) (light accumulating pigment) | | | | | | 20.0 |
| Silicone resin particles | Silicone 1 (4.5 μm) | 1.0 | | | | | |
| | Silicone 2 (2 μm) | | 1.0 | | | | |
| | Silicone 3 (0.7 μm) | | | 1.0 | | 1.0 | 1.0 |
| | Silicone 4 (6 μm) | | | | 1.0 | | |
| Total | | 100.0 | 100.0 | 100.0 | 100.0 | 100.0 | 100.0 |

3. Preparation of inkjet ink-2 (polymerizable ink)

3-1. Preparation of dispersion liquid

20 parts by mass of the inorganic particles 1 and 80 parts by mass of the monomer 1 were put in a polypropylene container together with 50 parts by mass of zirconia beads having an average particle size of 0.3 mm, and were subjected to a dispersion treatment for 30 minutes using a paint shaker, and the zirconia beads were removed to prepare a dispersion liquid 2A.

Dispersion liquids 2B to 2D and 2F were prepared in a similar manner to the preparation of the dispersion liquid 2A except that the inorganic particles were changed to the inorganic particles 2 to 5, respectively.

A dispersion liquid 2E was prepared in a similar manner to the preparation of the dispersion liquid 2A except that the inorganic particles were changed to the inorganic particles 3 and the dispersion time was changed to four hours.

A dispersion liquid 2G was prepared in a similar manner to the preparation of the dispersion liquid 2A except that the inorganic particles were changed to the inorganic particles 5 and the dispersion time was changed to four hours.

50 parts by mass of the inorganic particles 5 and 50 parts by mass of the monomer 1 were put in a polypropylene container together with 50 parts by mass of zirconia beads having an average particle size of 0.3 mm, and were subjected to a dispersion treatment for 30 minutes using a paint shaker, and the zirconia beads were removed to prepare a dispersion liquid 2H.

50 parts by mass of the inorganic particles 5, 50 parts by mass of the monomer 1, and 2 parts by mass of the silicone 3 were put in a polypropylene container together with 50 parts by mass of zirconia beads having an average particle size of 0.3 mm, and were subjected to a dispersion treatment for 30 minutes using a paint shaker, and the zirconia beads were removed to prepare a dispersion liquid 2I.

20 parts by mass of the inorganic particles 6 and 80 parts by mass of the monomer 1 were put in a polypropylene container together with 50 parts by mass of zirconia beads having an average particle size of 0.3 mm, and were subjected to a dispersion treatment for 30 minutes using a paint shaker, and the zirconia beads were removed to prepare a dispersion liquid 2J.

Thereafter, a median diameter of the inorganic particles in the dispersion liquid was measured with a particle size distribution analyzer (LUMiSizer manufactured by LUM Japan Co., Ltd.) using a Stokes sedimentation method.

A monomer, a photopolymerization initiator, a dispersion liquid, a silicone resin, and a polymerization inhibitor were mixed at a ratio presented in Tables 2 to 5, and the mixture was filtered through a 30 $\mu$m polypropylene pleat filter (manufactured by Roki Techno Co., Ltd.) to obtain each of inks 7 to 35. Note that numerical values described in parentheses in the columns of "inorganic particles" and "silicone resin particles" in Tables 2 to 5 are a median diameter of the inorganic particles and an average particle size of the silicone resin particles in a dispersion liquid, respectively.

[Table 2]

| Ink No. | | 7 | 8 | 9 | 10 | 11 | 12 | 13 | 14 | 15 |
|---|---|---|---|---|---|---|---|---|---|---|
| Polymerizable compound | Monomer 1 | 32.9 | 32.9 | 32.9 | 32.9 | 32.9 | 32.9 | 32.9 | 32.9 | 32.9 |
| | Monomer 2 | | | | | | | | | 40.0 |
| | Monomer 3 | 40.0 | 40.0 | 40.0 | 40.0 | 40.0 | 40.0 | 40.0 | 40.0 | |
| | Monomer 4 | | | | | | | | | |
| | Monomer 5 | | | | | | | | | |
| | Monomer 6 | | | | | | | | | |
| Photopolymerization initiator | Initiator 1 | 3.0 | 3.0 | 3.0 | 3.0 | 3.0 | 3.0 | 3.0 | 3.0 | 3.0 |
| | Initiator 2 | | | | | | | | | |
| | Initiator 3 | 3.0 | 3.0 | 3.0 | 3.0 | 3.0 | 3.0 | 3.0 | 3.0 | 3.0 |
| Inorganic particles | Dispersion liquid 2A (7 $\mu$m) (barium sulfate) | | | | | | | | | |
| | Dispersion liquid 2B (6 $\mu$m) (glass flakes) | | | | | | | | | |
| | Dispersion liquid 2C (8 $\mu$m) (light accumulating pigment) | 20.0 | 20.0 | 20.0 | 20.0 | | | | | |
| | Dispersion liquid 2D (1 $\mu$m) (zinc oxide) | | | | | | 20.0 | | | |
| | Dispersion liquid 2E (4.5 $\mu$m) (light accumulating pigment) | | | | | | | 20.0 | | |

(continued)

| Ink No. | | 7 | 8 | 9 | 10 | 11 | 12 | 13 | 14 | 15 |
|---|---|---|---|---|---|---|---|---|---|---|
| | Dispersion liquid 2F (3 μm) (light accumulating pigment) | | | | | | | 20.0 | | 20.0 |
| | Dispersion liquid 2G (1 μm) (light accumulating pigment) | | | | | | | | 20.0 | |
| | Dispersion liquid 2H (3 μm) (light accumulating pigment) | | | | | | | | | |
| | Dispersion liquid 2I (3 μm) (light accumulating pigment) | | | | | | | | | |
| | Dispersion liquid 2J (0.3 μm) (conductive particles) | | | | | | | | | |
| Silicone resin particles | Silicone 1 (4.5 μm) | 1.0 | | | | | | | | |
| | Silicone 2 (2 μm) | | 1.0 | | | | | | | |
| | Silicone 3 (0.7 μm) | | | 1.0 | | 1.0 | 1.0 | 1.0 | 1.0 | 1.0 |
| | Silicone 4 (6 μm) | | | | 1.0 | | | | | |
| Fine particles | Glass beads | | | | | | | | | |
| Polymerization inhibitor | | 0.1 | 0.1 | 0.1 | 0.1 | 0.1 | 0.1 | 0.1 | 0.1 | 0.1 |
| Total | | 100.0 | 100.0 | 100.0 | 100.0 | 100.0 | 100.0 | 100.0 | 100.0 | 100.0 |

[Table 3]

| Ink No. | | 16 | 17 | 18 | 19 | 20 | 21 | 22 |
|---|---|---|---|---|---|---|---|---|
| Polymerizable compound | Monomer 1 | 42.9 | 22.9 | 12.9 | 2.9 | 33.4 | 30.9 | 27.9 |
| | Monomer 2 | | | | | | | |
| | Monomer 3 | 40.0 | 40.0 | 40.0 | 30.0 | 40.0 | 40.0 | 40.0 |
| | Monomer 4 | | | | | | | |
| | Monomer 5 | | | | | | | |
| | Monomer 6 | | | | | | | |

(continued)

| Ink No. | | 16 | 17 | 18 | 19 | 20 | 21 | 22 |
|---|---|---|---|---|---|---|---|---|
| Photopolymerization initiator | Initiator 1 | 3.0 | 3.0 | 3.0 | 3.0 | 3.0 | 3.0 | 3.0 |
| | Initiator 2 | | | | | | | |
| | Initiator 3 | 3.0 | 3.0 | 3.0 | 3.0 | 3.0 | 3.0 | 3.0 |
| Inorganic particles | Dispersion liquid 2A (7 $\mu$m) (barium sulfate) | | | | | | | |
| | Dispersion liquid 2B (6 $\mu$m) (glass flakes) | | | | | | | |
| | Dispersion liquid 2C (8 $\mu$m) (light accumulating pigment) | | | | | | | |
| | Dispersion liquid 2D (1 $\mu$m) (zinc oxide) | | | | | | | |
| | Dispersion liquid 2E (4.5 $\mu$m) (light accumulating pigment) | | | | | | | |
| | Dispersion liquid 2F (3 $\mu$m) (light accumulating pigment) | 10.0 | 30.0 | 40.0 | 60.0 | 20.0 | 20.0 | 20.0 |
| | Dispersion liquid 2G (1 $\mu$m) (light accumulating pigment) | | | | | | | |
| | Dispersion liquid 2H (3 $\mu$m) (light accumulating pigment) | | | | | | | |
| | Dispersion liquid 2I (3 $\mu$m) (light accumulating pigment) | | | | | | | |
| | Dispersion liquid 2J (0.3 $\mu$m) (conductive particles) | | | | | | | |
| Silicone resin particles | Silicone 1 (4.5 $\mu$m) | | | | | | | |
| | Silicone 2 (2 $\mu$m) | | | | | | | |
| | Silicone 3 (0.7 $\mu$m) | 1.0 | 1.0 | 1.0 | 1.0 | 0.5 | 3.0 | 6.0 |
| | Silicone 4 (6 $\mu$m) | | | | | | | |
| Fine particles | Glass beads | | | | | | | |
| Polymerization inhibitor | | 0.1 | 0.1 | 0.1 | 0.1 | 0.1 | 0.1 | 0.1 |
| Total | | 100.0 | 100.0 | 100.0 | 100.0 | 100.0 | 100.0 | 100.0 |

[Table 4]

| Ink No. | | 23 | 24 | 25 | 26 | 27 | 28 | 29 | 30 | 31 |
|---|---|---|---|---|---|---|---|---|---|---|
| Polymerizable compound | Monomer 1 | 32.9 | 32.9 | 32.9 | 32.9 | 32.9 | 32.9 | 32.9 | 12.9 | 33.9 |
| | Monomer 2 | | | | | | | | | |
| | Monomer 3 | | | | 40.0 | 40.0 | 40.0 | 40.0 | 40.0 | 40.0 |
| | Monomer 4 | | 40.0 | | | | | | | |
| | Monomer 5 | 40.0 | | | | | | | | |
| | Monomer 6 | | | 40.0 | | | | | | |
| Photopolymerization initiator | Initiator 1 | 3.0 | 3.0 | 3.0 | | 3.0 | 3.0 | 3.0 | 3.0 | 3.0 |
| | Initiator 2 | | | | 3.0 | | | | | |
| | Initiator 3 | 3.0 | 3.0 | 3.0 | 3.0 | 3.0 | 3.0 | 3.0 | 3.0 | 3.0 |
| Inorganic particles | Dispersion liquid 2A (7 $\mu$m) (barium sulfate) | | | | | | 20.0 | | | |
| | Dispersion liquid 2B (6 $\mu$m) (glass flakes) | | | | | | | 20.0 | | |
| | Dispersion liquid 2C (8 $\mu$m) (light accumulating pigment) | | | | | | | | | |
| | Dispersion liquid 2D (1 $\mu$m) (zinc oxide) | | | | | | | | | |
| | Dispersion liquid 2E (4.5 $\mu$m) (light accumulating pigment) | | | | | | | | | |
| | Dispersion liquid 2F (3 $\mu$m) (light accumulating pigment) | 20.0 | 20.0 | 20.0 | 20.0 | | | | | |
| | Dispersion liquid 2G (1 $\mu$m) (light accumulating pigment) | | | | | | | | | |
| | Dispersion liquid 2H (3 $\mu$m) (light accumulating pigment) | | | | | | | | 20.0 | 40.0 |

(continued)

| Ink No. | | 23 | 24 | 25 | 26 | 27 | 28 | 29 | 30 | 31 |
|---|---|---|---|---|---|---|---|---|---|---|
| | Dispersion liquid 2I (3 μm) (light accumulating pigment) | | | | | | | | | 20.0 |
| | Dispersion liquid 2J (0.3 μm) (conductive particles) | | | | | | | | | |
| Silicone resin particles | Silicone 1 (4.5 μm) | | | | | 1.0 | 1.0 | | | |
| | Silicone 2 (2 μm) | | | | | | | | | |
| | Silicone 3 (0.7 μm) | 1.0 | 1.0 | 1.0 | 1.0 | | | 1.0 | 1.0 | |
| | Silicone 4 (6 μm) | | | | | | | | | |
| Fine particles | Glass beads | | | | | | | | | |
| Polymerization inhibitor | | 0.1 | 0.1 | 0.1 | 0.1 | 0.1 | 0.1 | 0.1 | 0.1 | 0.1 |
| Total | | 100.0 | 100.0 | 100.0 | 100.0 | 100.0 | 100.0 | 100.0 | 100.0 | 100.0 |

[Table 5]

| Ink No. | | 32 | 33 | 34 | 35 |
|---|---|---|---|---|---|
| Polymerizable compound | Monomer 1 | 32.9 | 33.9 | 32.9 | 32.9 |
| | Monomer 2 | 40.0 | 40.0 | 40.0 | 40.0 |
| | Monomer 3 | | | | |
| | Monomer 4 | | | | |
| | Monomer 5 | | | | |
| | Monomer 6 | | | | |
| Photopolymerization initiator | Initiator 1 | 3.0 | 3.0 | 3.0 | 3.0 |
| | Initiator 2 | | | | |
| | Initiator 3 | 3.0 | 3.0 | 3.0 | 3.0 |
| Inorganic particles | Dispersion liquid 2A (7 μm) (barium sulfate) | | | | |
| | Dispersion liquid 2B (6 μm) (glass flakes) | | | | |
| | Dispersion liquid 2C (8 μm) (light accumulating pigment) | 20.0 | 20.0 | | |
| | Dispersion liquid 2D (1 μm) (zinc oxide) | | | | |
| | Dispersion liquid 2E (4.5 μm) (light accumulating pigment) | | | | |
| | Dispersion liquid 2F (3 μm) (light accumulating pigment) | | | 20.0 | |
| | Dispersion liquid 2G (1 μm) (light accumulating pigment) | | | | |
| | Dispersion liquid 2H (3 μm) (light accumulating pigment) | | | | |
| | Dispersion liquid 2I (3 μm) (light accumulating pigment) | | | | |
| | Dispersion liquid 2J (0.3 μm) (conductive particles) | | | | 20.0 |

(continued)

| Ink No. | | 32 | 33 | 34 | 35 |
|---|---|---|---|---|---|
| Silicone resin particles | Silicone 1 (4.5 μm) | | | 1.0 | |
| | Silicone 2 (2 μm) | | | | |
| | Silicone 3 (0.7 μm) | | | | 1.0 |
| | Silicone 4 (6 μm) | | | | |
| Fine particles | Glass beads | 1.0 | | | |
| Polymerization inhibitor | | 0.1 | 0.1 | 0.1 | 0.1 |
| Total | | 100.0 | 100.0 | 100.0 | 100.0 |

4. Evaluation

The inks 1 to 35 prepared above were evaluated as follows.

4-1. Viscosity at 25°C

A viscosity of each of the inks heated to 25°C was measured using a rheometer (stress-controlled rheometer Physica MCR manufactured by Anton Paar GmbH, cone plate diameter: 75 mm, cone angle: 1.0°) at a shear rate of 1000/sec.

Based on the measured viscosities, the viscosity of each of the inks was evaluated according to the following criteria.

○: The viscosity of an ink is 20 mPa•s or more and 500 mPa•s or less.

△: The viscosity of an ink is larger than 500 mPa•s

4-2. Sedimentation reversion property

10 g of a sample was added to a 20 mL glass sample tube and allowed to stand at 25°C for three days to deposit a solid content on a bottom of the sample tube. By vigorously shaking up and down the deposit by hand, the number of times of handshaking at which the deposit was loosened was measured.

◎: The deposit is almost peeled off from the bottom of the sample tube after handshaking is performed 1 to 10 times.
○: The deposit is almost peeled off from the bottom of the sample tube after handshaking is performed 11 to 30 times.
△: The deposit is almost peeled off from the bottom of the sample tube after handshaking is performed 31 to 60 times.
×: The deposit is not peeled off from the bottom of the sample tube after handshaking is performed 60 times.

4-3. Rubbing resistance of nozzle surface

A maintenance cloth (Savina CK manufactured by KB SEIREN) to which each of the inks was attached was pressed against a nozzle surface of KM1024iLHE manufactured by KONICA MINOLTA, INC., and rubbed 100 times, and then the nozzle surface was observed.

○: Scratches are hardly observed.
△: Scratches are slightly observed.
×: Large scratches are observed.

4-4. Circulation stability

An ink was circulated in a transparent tube having an inner diameter of 4 mm at 1.0 mL/s for one hour, and then the liquid feeding was stopped for 30 minutes. Thereafter, the ink was circulated again at the same flow rate for 30 minutes, and a state of a deposit generated in the tube and a state of circulation were observed.

◎: Circulation was smoothly possible without changing a state of liquid feeding before and after liquid feeding was stopped.

∘: Circulation was possible without any problem, but a small amount of deposit was observed when the inside was checked after the experiment.

△: Circulation was possible without any problem, but a slightly large amount of deposit was observed when the inside was checked after the experiment.

×: A deposit was generated, clogging occurred in the tube, and circulation was not possible.

4-5. Storage stability

Each of the inks was allowed to stand at a high temperature of 70°C for one week, and then circulation stability was evaluated.

∘: Circulation stability was almost the same as that of the ink before being allowed to stand at a high temperature, and there was almost no change.

△: Circulation stability was slightly deteriorated as compared with the ink before being allowed to stand at a high temperature.

Evaluation results of the inks are presented in Tables 6 to 10. Note that Tables 6 to 10 also present a particle size ratio (median diameter of inorganic particles/average particle size of silicone resin particles) of each of the inks, a flow rate of the ink, and the parameter X (X = (A/B) × C).

[Table 6]

| Notes | | Example | Example | Example | Example | Example | Example |
|---|---|---|---|---|---|---|---|
| Ink No. | | 1 | 2 | 3 | 4 | 5 | 6 |
| Evaluation | Viscosity | ○ | ○ | ○ | ○ | ○ | ○ |
| | Sedimentation reversion property | ○ | ○ | ○ | △ | ◎ | ◎ |
| | Rubbing resistance of nozzle surface | △ | △ | △ | △ | △ | △ |
| | Circulation stability | ○ | ○ | ○ | △ | ○ | ○ |
| | Storage stability | △ | △ | △ | △ | △ | △ |
| | Particle size ratio | 1.8 | 4.0 | 11.4 | 1.3 | 1.4 | 6.4 |
| | Flow rate [mL/s] | 1 | 1 | 1 | 1 | 1 | 1 |
| | Parameter X | 1.8 | 4.0 | 11.4 | 1.3 | 1.4 | 6.4 |

[Table 7]

| Notes | Ink No. | Example 7 | Example 8 | Example 9 | Example 10 | Example 11 | Example 12 | Example 13 | Example 14 | Example 15 |
|---|---|---|---|---|---|---|---|---|---|---|
| | Viscosity at 25°C | ○ | ○ | ○ | ○ | ○ | ○ | ○ | ○ | ○ |
| | Sedimentation reversion property | ○ | ○ | ○ | △ | ◎ | ◎ | ◎ | ◎ | ◎ |
| Evaluation | Rubbing resistance of nozzle surface | △ | △ | △ | △ | △ | ○ | ○ | ○ | ○ |
| | Circulation stability | ○ | ◎ | ◎ | △ | ○ | ◎ | ◎ | ○ | ◎ |
| | Storage stability | ○ | ○ | ○ | ○ | ○ | ○ | ○ | ○ | △ |
| | Particle size ratio | 1.8 | 4.0 | 11.4 | 1.3 | 1.4 | 6.4 | 4.3 | 1.4 | 4.3 |
| | Flow rate [mL/s] | 1 | 1 | 1 | 1 | 1 | 1 | 1 | 1 | 1 |
| | Parameter X | 1.8 | 4.0 | 11.4 | 1.3 | 1.4 | 6.4 | 4.3 | 1.4 | 4.3 |

[Table 8]

| Notes | | Example | Example | Example | Example | Example | Example | Example |
|---|---|---|---|---|---|---|---|---|
| Ink No. | | 16 | 17 | 18 | 19 | 20 | 21 | 22 |
| Evaluation | Viscosity at 25°C | ○ | ○ | ○ | ○ | ○ | ○ | ○ |
| | Sedimentation reversion property | ◎ | ◎ | ◎ | ○ | ◎ | ◎ | ◎ |
| | Rubbing resistance of nozzle surface | ○ | ○ | ○ | ○ | ○ | ○ | ○ |
| | Circulation stability | ◎ | ◎ | ◎ | ◎ | ◎ | ◎ | △ |
| | Storage stability | ○ | ○ | ○ | ○ | ○ | ○ | ○ |
| | Particle size ratio | 4.3 | 4.3 | 4.3 | 4.3 | 4.3 | 4.3 | 4.3 |
| | Flow rate [mL/s] | 1 | 1 | 1 | 1 | 1 | 1 | 1 |
| | Parameter X | 4.3 | 4.3 | 4.3 | 4.3 | 4.3 | 4.3 | 4.3 |

[Table 9]

| Notes | | Example 23 | Example 24 | Example 25 | Example 26 | Example 27 | Example 28 | Example 29 | Example 30 | Example 31 |
|---|---|---|---|---|---|---|---|---|---|---|
| Ink No. | | | | | | | | | | |
| Evaluation | Viscosity at 25°C | △ | ○ | ○ | ○ | ○ | ○ | ○ | ○ | ○ |
| | Sedimentation reversion property | △ | ◎ | ◎ | ◎ | ○ | ○ | ◎ | ◎ | ◎ |
| | Rubbing resistance of nozzle surface | ○ | ○ | ○ | ○ | △ | △ | ○ | ○ | ○ |
| | Circulation stability | ◎ | ◎ | ◎ | ◎ | ◎ | △ | ◎ | ◎ | ◎ |
| | Storage stability | ○ | ○ | ○ | ○ | ○ | ○ | ○ | ○ | ○ |
| | Particle size ratio | 4.3 | 4.3 | 4.3 | 4.3 | 1.6 | 1.3 | 4.3 | 4.3 | 4.3 |
| | Flow rate [mL/s] | 1 | 1 | 1 | 1 | 1 | 1 | 1 | 1 | 1 |
| | Parameter X | 4.3 | 4.3 | 4.3 | 4.3 | 1.6 | 1.3 | 4.3 | 4.3 | 4.3 |

[Table 10]

| Notes | | Comparative Example | Comparative Example | Comparative Example | Comparative Example |
|---|---|---|---|---|---|
| Ink No. | | 32 | 33 | 34 | 35 |
| Evaluation | Viscosity at 25°C | ○ | ○ | ○ | ○ |
| | Sedimentation reversion property | × | × | × | × |
| | Rubbing resistance of nozzle surface | × | × | × | × |
| | Circulation stability | × | × | × | × |
| | Storage stability | △ | △ | △ | △ |
| | Particle size ratio | 2.9 | - | 0.7 | 0.4 |
| | Flow rate [mL/s] | 1 | 1 | 1 | 1 |
| | Parameter X | 2.9 | - | 0.7 | 0.4 |

As is apparent from Tables 1 to 10, when the nonaqueous inkjet ink contained inorganic particles and silicone resin particles, the average particle size of the silicone resin particles was 0.3 $\mu$m or more and 10$\mu$m or less, and the average particle size of the silicone resin particles was smaller than the median diameter of the inorganic particles, redispersibility of the inorganic particles that had settled was favorable.

[Experiment 2]

The inks 9, 10, 11, and 13 prepared in Experiment 1 were used and circulated for one hour with the flow rate changed, and then the liquid feeding was stopped for 30 minutes. Thereafter, each of the inks was circulated again at the same flow rate for 30 minutes, a state of a deposit generated in the tube and a state of circulation were observed, and circulation stability was evaluated.

◎: Circulation was smoothly possible without changing a state of liquid feeding before and after liquid feeding was stopped.

○: Circulation was possible without any problem, but a small amount of deposit was observed when the inside was checked after the experiment.

△: A deposit was generated, and clogging easily occurred in the tube.

×: A deposit was generated, clogging occurred in the tube, and circulation was not possible.

Evaluation results are presented in Table 11. Note that Table 11 also presents a particle size ratio (median diameter of inorganic particles/average particle size of silicone resin particles) of each of the inks, a flow rate of the ink, and the parameter X (X = (A/B) × C).

[Table 11]

| Notes | Example | Example | Example | Example | Example | Example | Example | Example | Example |
|---|---|---|---|---|---|---|---|---|---|
| Ink No. | 9 | 9 | 10 | 10 | 11 | 13 | 13 | 13 | 11 |
| Particle size A of inorganic particle [$\mu$m] | 8 | 8 | 8 | 8 | 1 | 3 | 3 | 3 | 1 |

(continued)

| Notes | Example | Example | Example | Example | Example | Example | Example | Example | Example |
|---|---|---|---|---|---|---|---|---|---|
| Particle size B of silicone re-sin particle [$\mu$m] | 0.7 | 0.7 | 6 | 6 | 0.7 | 0.7 | 0.7 | 0.7 | 0.7 |
| Particle size ratio A/B | 11.4 | 11.4 | 1.3 | 1.3 | 1.4 | 4.3 | 4.3 | 4.3 | 1.4 |
| Flow rate C [mL/s] | 1 | 6 | 1 | 6 | 1 | 1 | 6 | 0.1 | 0.1 |
| X ((A/B) × C) | 11.4 | 68.6 | 1.3 | 8.0 | 1.4 | 4.3 | 25.7 | 0.4 | 0.1 |
| Circulation stability | ◎ | ◎ | △ | ○ | ○ | ◎ | ◎ | ◎ | △ |

As is apparent from Table 11, circulation stability could be enhanced by setting a flow rate of the ink according to a particle size ratio between the inorganic particles and the silicone resin particles.

According to the present invention, the nonaqueous inkjet ink containing inorganic particles can be more easily used. Therefore, the present invention is expected to further expand applications to which the nonaqueous inkjet ink can be applied and to contribute to further development in the art.

An embodiment of the present invention provides a nonaqueous inkjet ink having excellent redispersibility of inorganic particles that have settled, and a method for forming a cured product using the nonaqueous inkjet ink.

Although embodiments of the present invention have been described and illustrated in detail, the disclosed embodiments are made for purposes of illustration and example only and not limitation. The scope of the present invention should be interpreted by terms of the appended claims.

## Claims

1. A nonaqueous inkjet ink comprising inorganic particles and silicone resin particles, wherein

   the silicone resin particles have an average particle size of 0.3 $\mu$m or more and 10 $\mu$m or less, and
   the average particle size of the silicone resin particles is smaller than a median diameter of the inorganic particles.

2. The nonaqueous inkjet ink according to claim 1, wherein
   the silicone resin particles contain a silicone resin having a silsesquioxane structure.

3. The nonaqueous inkjet ink according to claim 1, wherein
   the average particle size of the silicone resin particles is 0.3 $\mu$m or more and 5 $\mu$m or less.

4. The nonaqueous inkjet ink according to claim 1, wherein
   the nonaqueous inkjet ink has a viscosity of 20 mPa•s or more and 500 mPa•s or less at 25°C.

5. The nonaqueous inkjet ink according to claim 1, comprising
   a polymerizable compound to be polymerized by irradiation with an active energy ray.

6. The nonaqueous inkjet ink according to claim 5, wherein
   the polymerizable compound contains a compound having an aromatic ring.

7. The nonaqueous inkjet ink according to claim 1, which
   can form a cured product having a volume resistivity of $10^{11}$ $\Omega$•m or more.

8. The nonaqueous inkjet ink according to claim 1, wherein

the median diameter of the inorganic particles is 0.5 μm or more and 5 μm or less.

9.  The nonaqueous inkjet ink according to claim 1, wherein
the inorganic particles are particles selected from the group consisting of glitter pigment particles, zinc oxide particles, and light accumulating pigment particles.

10. The nonaqueous inkjet ink according to claim 1, wherein
the inorganic particles are light accumulating pigment particles.

11. A method for forming a cured product, comprising:

a step of applying the nonaqueous inkjet ink according to any one of claims 1 to 10 to a base material; and
a step of forming a film of the applied nonaqueous inkjet ink.

12. The method for forming a cured product according to claim 11, wherein
the step of applying the nonaqueous inkjet ink to the base material is performed while the nonaqueous inkjet ink is circulated.

13. The method for forming a cured product according to claim 11, wherein
when the median diameter of the inorganic particles is represented by A μm, the average particle size of the silicone resin particles is represented by B μm, and a flow rate of the nonaqueous inkjet ink is represented by C mL/s, the following general formula X is 0.30 or more and 95.0 or less:

$$X = (A/B) \times C.$$

**Patentansprüche**

1.  Eine nichtwässrige Tintenstrahltinte, umfassend anorganische Partikel und Silikonharz-Partikel, wobei

die Silikonharz-Partikel eine durchschnittliche Partikelgröße von 0,3 μm oder mehr und 10 μm oder weniger aufweisen und
die durchschnittliche Partikelgröße der Silikonharz-Partikel kleiner ist als ein Median-Durchmesser der anorganischen Partikel.

2.  Die nichtwässrige Tintenstrahltinte gemäß Anspruch 1, wobei
die Silikonharz-Partikel ein Silikonharz mit einer Silsesquioxan-Struktur enthalten.

3.  Die nichtwässrige Tintenstrahltinte gemäß Anspruch 1, wobei
die durchschnittliche Partikelgröße der Silikonharz-Partikel 0,3 μm oder mehr und 5 μm oder weniger beträgt.

4.  Die nichtwässrige Tintenstrahltinte gemäß Anspruch 1, wobei
die nichtwässrige Tintenstrahltinte eine Viskosität von 20 mPa•s oder mehr und 500 mPa•s oder weniger bei 25°C aufweist.

5.  Die nichtwässrige Tintenstrahltinte gemäß Anspruch 1, umfassend
eine polymerisierbare Verbindung, die durch Bestrahlung mit aktiver Energiestrahlung polymerisiert wird.

6.  Die nichtwässrige Tintenstrahltinte gemäß Anspruch 5, wobei
die polymerisierbare Verbindung eine Verbindung mit einem aromatischen Ring enthält.

7.  Die nichtwässrige Tintenstrahltinte gemäß Anspruch 1, die
ein ausgehärtetes Produkt mit einem spezifischen Volumenwiderstand von $10^{11}$ Ω•m oder mehr bilden kann.

8.  Die nichtwässrige Tintenstrahltinte gemäß Anspruch 1, wobei
der Median-Durchmesser der anorganischen Partikel 0,5 μm oder mehr und 5 μm oder weniger beträgt.

**9.** Die nichtwässrige Tintenstrahltinte gemäß Anspruch 1, wobei
die anorganischen Partikel Partikel sind, die ausgewählt sind aus der Gruppe bestehend aus Glitzerpigmentpartikeln, Zinkoxidpartikeln und lichtakkumulierenden Pigmentpartikeln.

**10.** Die nichtwässrige Tintenstrahltinte gemäß Anspruch 1, wobei
die anorganischen Partikel lichtakkumulierende Pigmentpartikel sind.

**11.** Ein Verfahren zur Herstellung eines gehärteten Produkts, umfassend:

einen Schritt des Aufbringens der nichtwässrigen Tintenstrahltinte gemäß einem der Ansprüche 1 bis 10 auf ein Trägermaterial; und
einen Schritt des Bildens eines Films aus der aufgebrachten nichtwässrigen Tintenstrahltinte.

**12.** Das Verfahren zur Herstellung eines gehärteten Produkts gemäß Anspruch 11, wobei
der Schritt des Aufbringens der nichtwässrigen Tintenstrahltinte auf das Trägermaterial durchgeführt wird während die nichtwässrige Tintenstrahltinte zirkuliert wird.

**13.** Das Verfahren zur Herstellung eines gehärteten Produkts gemäß Anspruch 11, wobei
wenn der Median-Durchmesser der anorganischen Partikel mit A $\mu$m bezeichnet wird, die durchschnittliche Partikelgröße der Silikonharz-Partikel mit B $\mu$m bezeichnet wird und eine Flussrate der nichtwässrigen Tintenstrahltinte mit C mL/s bezeichnet wird, die folgende allgemeine Formel X 0,30 oder mehr und 95,0 oder weniger ergibt:

$$X = (A/B) \times C.$$

**Revendications**

**1.** Encre non aqueuse pour jet d'encre comprenant des particules inorganiques et des particules de résine silicone, dans laquelle

les particules de résine silicone ont une taille de particule moyenne de 0,3 $\mu$m ou plus et de 10 $\mu$m ou moins, et la taille de particule moyenne des particules de résine silicone est inférieure au diamètre médian des particules inorganiques.

**2.** Encre non aqueuse pour jet d'encre selon la revendication 1, dans laquelle
les particules de résine silicone contiennent une résine silicone ayant une structure silsesquioxane.

**3.** Encre non aqueuse pour jet d'encre selon la revendication 1, dans laquelle
la taille de particule moyenne des particules de résine silicone est de 0,3 $\mu$m ou plus et de 5 $\mu$m ou moins.

**4.** Encre non aqueuse pour jet d'encre selon la revendication 1, dans laquelle
l'encre non aqueuse pour jet d'encre a une viscosité de 20 mPa•s ou plus et de 500 mPa•s ou moins à 25 °C.

**5.** Encre non aqueuse pour jet d'encre selon la revendication 1, comprenant
un composé polymérisable destiné à être polymérisé par irradiation par un rayonnement d'énergie active.

**6.** Encre non aqueuse pour jet d'encre selon la revendication 5, dans laquelle
le composé polymérisable contient un composé ayant un cycle aromatique.

**7.** Encre non aqueuse pour jet d'encre selon la revendication 1, qui
peut former un produit durci ayant une résistivité volumique de $10^{11}$ $\Omega$•m ou plus.

**8.** Encre non aqueuse pour jet d'encre selon la revendication 1, dans laquelle
le diamètre médian des particules inorganiques est de 0,5 $\mu$m ou plus et de 5 $\mu$m ou moins.

**9.** Encre non aqueuse pour jet d'encre selon la revendication 1, dans laquelle
les particules inorganiques sont des particules choisies dans le groupe constitué par des particules de pigment pailletées, des particules d'oxyde de zinc et des particules de pigment accumulant la lumière.

10. Encre non aqueuse pour jet d'encre selon la revendication 1, dans laquelle les particules inorganiques sont des particules de pigment accumulant la lumière.

11. Procédé de formation d'un produit durci, comprenant :

   une étape d'application de l'encre non aqueuse pour jet d'encre selon l'une des revendications 1 à 10 sur un matériau de support ; et
   une étape de formation d'un film de l'encre non aqueuse pour jet d'encre appliquée.

12. Procédé de formation d'un produit durci selon la revendication 11, dans lequel
   l'étape d'application de l'encre non aqueuse pour jet d'encre sur le matériau de support est réalisée pendant que l'encre non aqueuse pour jet d'encre est en circulation.

13. Procédé de formation d'un produit durci selon la revendication 11, dans lequel
   lorsque le diamètre médian des particules inorganiques est représenté par A $\mu$m, la taille de particule moyenne des particules de résine silicone est représentée par B $\mu$m, et le débit de l'encre non aqueuse pour jet d'encre est représenté par C mL/s, la formule générale X suivante donne 0,30 ou plus et 95,0 ou moins:

$$X = (A/B) \times C.$$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004256726 A
- JP 2021155502 A
- JP 2001135141 A
- WO 2014073680 A1
- EP 2682438 A1